# EUROPÄISCHE PATENTSCHRIFT

(11) **EP 0 828 634 B1**
(45) Veröffentlichungstag und Bekanntmachung des Hinweises auf die Patenterteilung: **31.05.2000**
(21) Anmeldenummer: 96919550.2
(22) Anmeldetag: 10.05.1996
(51) Int. Cl.: B60R 21/16

(54) **AIRBAGMODUL**
AIR BAG MODULE
MODULE A COUSSIN GONFLABLE

(30) Priorität: 29.05.1995 DE 19519998
(43) Veröffentlichungstag der Anmeldung: 18.03.1998
(73) Patentinhaber: Petri AG, 63743 Aschaffenburg (DE)
(72) Erfinder: ADOMEIT, Hans-Dieter, D-10623 Berlin (DE); BRAUN, Eleonore, D-13505 Berlin (DE); MAROTZKE, Thomas, D-13187 Berlin (DE)
(74) Vertreter: Bärmann, Klaus, Dipl.-Ing.
(86) Internationale Anmeldenummer: DE9600871
(87) Internationale Veröffentlichungsnummer: WO9638324

(56) Entgegenhaltungen:
- EP-A- 0 590 845
- DE-A- 2 109 637
- GB-A- 2 283 464
- US-A- 5 310 216
- US-A- 5 360 231
- PATENT ABSTRACTS OF JAPAN vol. 017, no. 430 (M-1460), 10.August 1993 & JP,A,05 092746 (TOYO TAKASAGO KANDENCHI KK), 16.April 1993,

## Beschreibung

Die Erfindung betrifft ein Airbagmodul nach dem Oberbegriff des Anspruchs 1.

Die in bekannten Airbagmodulen verwendeten Gassäcke weisen im nicht aufgeblasenen Zustand eine kreisrunde, eine elliptische Form oder eine diesen Formen ähnliche Form auf. Beifahrerairbags benutzen Gassäcke, die im allgemeinen aus mehreren Teilen zusammengesetzte dreidimensionale Gebilde darstellen. Sie sind so angeordnet, daß sie im voll aufgeblasenen Zustand den Raum zwischen der Armaturentafel und dem Insassen ausfüllen. Während des Aufblasens, insbesondere vor Erreichen der Endform weisen diese Airbags eine im wesentlichen kugelige Form auf.Diese bekannten Gassäcke breiten sich im Crashfall sowohl stark in Richtung des Insassen als auch nach oben aus, so daß ein ausreichend großes Schutzpolster für den Insassen entsteht.

Die bekannten Gassäcke weisen aber den Nachteil auf, daß sie aufgrund der gleichmäßigen Ausbreitung im aufgeblasenen Zustand Bereiche aufweisen, die für den Schutz des Fahrers nicht erforderlich sind, die aber mit aufgeblasen werden müssen, um die Schutzfunktion des Gassackes insgesamt zu gewährleisten.

Weiterhin besteht der Nachteil, daß sich der Gassack, insbesondere beim Airbagmodul für den Beifahrer, ohne zusätzliche Maßnahmen nicht gezielt aufblasen und entfalten läßt. Außerdem muß die Windschutzscheibe wichtige Abstütz- bzw. Umlenkfunktionen übernehmen. Diese Funktion kann sie aber nicht erfüllen, wenn sie, z.B. bei einem Sekundäraufprall, zerstört ist.

Zur Vermeidung dieses Nachteils ist bereits bekannt, im Gassack Fangbänder anzuordnen, die die Ausbreitung des Gassackes in Richtung der Windschutzscheibe begrenzen. Fangbänder stellen aber zusätzliche Teile dar, die den Gassack verteuern.

Aus der JP-A-05 092746 (Patent Abstracts of Japan) ist ein Gassack für einen Beifahrersitz bekannt, der einen in der Mitte verengten Querschnitt aufweist. Dadurch soll Gassackmaterial eingespart werden. Der Nachteil dieses Gassacks besteht darin, daß er sich an der Frontscheibe des Kraftfahrzeuges abstützt. Diese Abstützfunktion kann aber nicht mehr erfüllt werden, wenn sie zerstört wird. Ein weiterer Nachteil besteht darin, daß sich der verengte Querschnitt an der Stelle befindet, an der die Krafteinleitung durch den eindringenden Insassen am größten ist, so daß nur eine begrenzte Rückhaltewirkung eintreten kann.

Weiterhin ist aus der EP-A-0 590 845 ein Seitenairbag bekannt, der im Bereich des Einblasmundes eine Verengung aufweist. Dadurch ist er in einen unteren und oberen Bereich aufgeteilt, die in ihrer Größe den Gegebenheiten der Tür angepaßt sind. Die Verengung dient der Zuführung des Gases zum unteren und oberen Bereich und hat keine Schutzfunktion. Da der Querschnitt von der Verengung ausgehend sprunghaft ansteigt, werden die Nähte und das Gewebe stark belastet.

Der Erfindung liegt die Aufgabe zugrunde, den Gassack so auszubilden und anzuordnen, daß große Stützflächen im wesentlichen nur dort vorhanden sind, wo sie für den Insassen erforderlich sind, und daß er sich in einer vorbestimmten Richtung entfallten kann.

Erfindungsgemäß wird das entsprechend den kennzeichnenden Merkmalen des Anspruchs 1 erreicht.

Ein Airbagmodul mit Gassack und Gasgenerator, insbesondere Beifahrerairbagmodul, wobei der Gassack in ausgebreiteter Lage einen verengten Querschnitt aufweist, ist erfindungsgemäß dadurch gekennzeichnet, daß der verengte Querschnitt zumindest annähernd parallele Seiten aufweist, an die sich beidseitig kontinuierlich vergrößerte Abschnitte anschließen, so daß der Gassack knochenförmig ist, und daß der Gassack auch im aufgeblasenen Zustand eine Knochenform aufweist, wobei einer der vergrößerten Abschnitte dem Insassen zugekehrt ist.

Ein solcher Gassack weist den Vorteil auf, daß er sich ohne die Anordnung von Fangbändern gezielt in eine bestimmte Richtung aufbläst, da er sich in den Bereichen mit verengtem Querschnitt weniger ausbreiten kann als in den übrigen Bereichen. Diese verengten Querschnitte dienen insbesondere der Zuführung des Gases und befinden sich in Bereichen des Gassackes, die für die Schutzfunktion von untergeordneer Bedeutung sind. Durch den Wegfall von Gassackabschnitten, die für die Schutzfunktion nicht benötigt werden, ist es möglich, das Volumen des Gassackes insgesamt zu verkleinern.

Dagegen weist er im vorderen Teil, der für die Schutzfunktion von großer Bedeutung ist, ein großes Volumen auf. Weiterhin wird durch diese Form erreicht, daß sich der Gassack hauptsächlich in Richtung des Insassen aufbläst.

In einer Ausführungsform erstrecken sich die zumindest annähernd parallelen Seiten über etwa ein Drittel der Gassackteile und die beidseitig anschließenden vergrößerten Abschnitte erstrecke sich jeweils ebenfalls etwa über ein Drittel der Länge. Weiterhin ist es zweckmäßig, daß ein dem Insassen zugewandter vergrößerter Abschnitt des Gassackes größer ist als ein sich in entgegengesetzter Richtung dem Abschnitt mit parallelen Seiten anschließender vergrößerter Abschnitt.

Dadurch daß der Gassack im aufgeblasenen Zustand in der Draufsicht die Form eines Knochens aufweist, sind ein mittlerer enger Abschnitt und zwei großflächige Endabschnitte vorhanden. In der Seitenansicht ergibt sich bei dieser Ausführung im aufgeblasenen Zustand eine Linsenform. Diese Form des aufgeblasenen Gassackes erbringt neben den bereits genannten Vorteilen den weiteren Vorteil, daß eine bessere Thoraxabstützung erfolgt. Diese Linsenform, d.h. die geringere Ausbreitung des Gassackes in der Höhe wird dabei ausschließlich aufgrund der Querschnittsform zweier zweidimensionaler Teile des Gassackes erreicht. Es sind also weder eine aufwendige Schnittform noch zusätzliche Reißnähte oder Fangbänder erforderlich. Dieser Gassack breitet sich auch ohne Reißnähte stärker horizontal als vertikal aus.

Ein zusätzlicher Vorteil besteht darin, daß die Einschnürung das erforderliche Gassackvolumen reduziert. Damit ist eine schnellere Füllung möglich und es kann ein kleinerer Gasgenerator verwendet werden, d.h. ein Gasgenerator mit geringerer Masse und kleinerem Bauraum.

Der Gassack besteht vorzugsweise aus zwei Teilen gleicher Form

Der Gasgenerator sollte bei Verwendung des erfindungsgemäßen Gassacks unterhalb, oberhalb oder in der Mitte der Armaturentafel so angeordnet sein, daß seine Hauptausblasrichtung im wesentlichen waagerecht in Richtung auf den Insassen verläuft.

Der Gasgenerator ist bei einem Beifahrerairbagmodul vorteilhaft unterhalb der Armaturentafel so angeordnet, daß seine Hauptausblasrichtung im wesentlichen waagerecht in Richtung auf den Insassen verläuft. Das wird weiterhin durch die Verwendung einer Raffaltung für den Gassack und einen Ausblasdiffusor unterstützt. Durch diese Anordnung insbesondere des erfindungsgemäßen Gassackes werden die oben genannten Vorteile noch verstärkt. Weiterhin erfolgt die Abstützung des Gassackes beim Aufblasen und im aufgeblasenen Zustand nicht mehr an der Windschutzscheibe sondern an der Armaturentafel. Dort ist eine große Abstützfläche vorhanden und die Abstützkräfte werden großflächig in die Armaturentafel geleitet. Dadurch ist der Gassack sicherer und besser positionierbar und ist durch den Insassen auch schwerer hochzudrücken, d.h. schwerer aus seiner Lage zu bringen, in der er dem Insassen optimalen Schutz bietet. Dieses bessere Wirksamwerden des Gassackes trägt ebenfalls dazu bei, daß insgesamt ein geringeres Gassackvolumen erforderlich ist.

Die Vorteile des knochenförmigen Gassackes sind auch bei einer Top- und Mid-mounted Einbaulage wirksam.

Die Erfindung soll in Ausführungsbeispielen anhand von Zeichnungen erläutert werden. Es zeigen:
- Fig. 1: einen Gassack mit einem verengten Querschnitt im Mittelteil im ausgebreiteten unaufgeblasenen Zustand;
- Fig. 2: einen Querschnitt durch den Gassack nach Fig. 1;
- Fig. 3: den Gassack der Figuren 1 und 2 im aufgeblasenen Zustand;
- Fig. 4: den in einem Kraftfahrzeug eingebauten Gassack der Figuren 1 bis 3 im aufgeblasenen Zustand;
- Fig. 5 und 6: einen Gassack in Knochenform ohne Einblasmund;
- Fig. 7: die möglichen Anordnungen des Gassackes eines Beifahrerairgmoduls in der Armaturentafel.

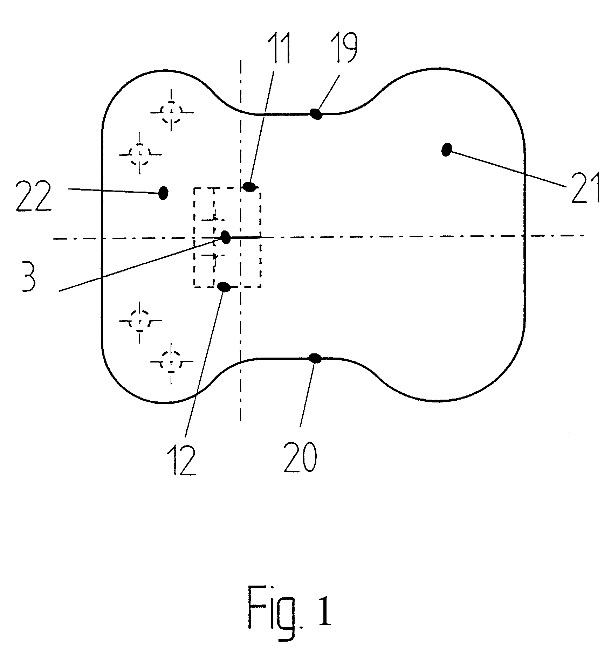

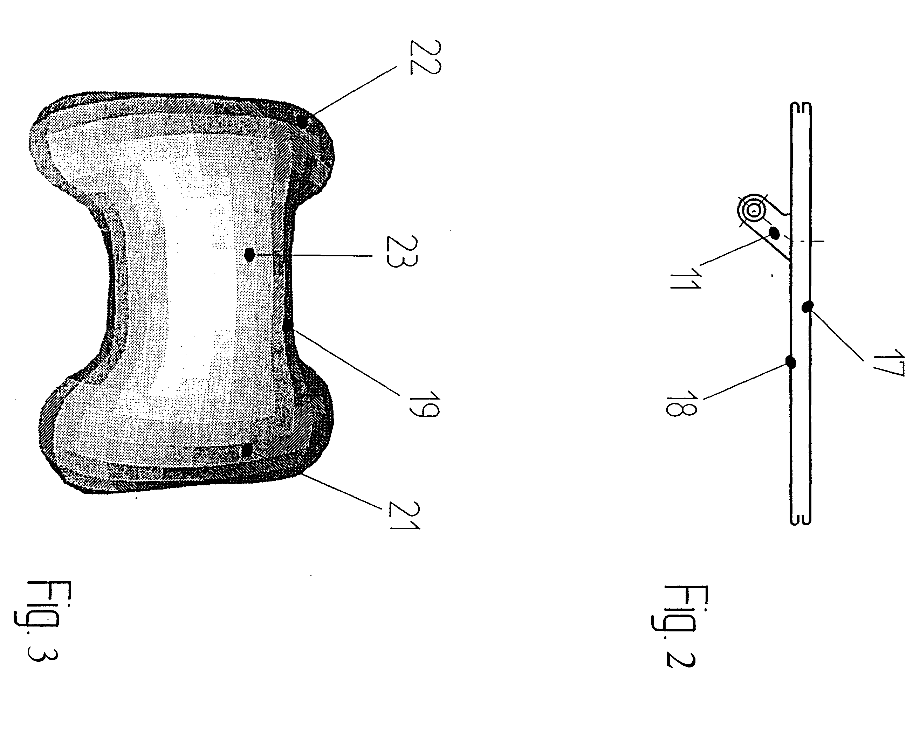

Im Ausführungsbeispiel der Figuren 1 bis 3 ist ein Gassack dargestellt, der aus einem Oberteil 17 und einem in seiner äußeren Form gleichen Unterteil 18 besteht. Diese Teile weisen im mittleren Abschnitt parallele Seiten 19, 20 auf. An diesen Abschnitt, in dem der Einblasmund 3 liegt, schließen sich beidseitig vergrößerte Abschnitte 21, 22 an, so daß dieser Gassack in seinem in Fig. 3 dargestellten nicht aufgeblasenen Zustand Ähnlichkeit mit einem Knochen hat. Der Abschnitt 21 ist dem Insassen zugekehrt, während der Abschnitt 22 das entgegengesetzte Ende des Gassackes bildet.

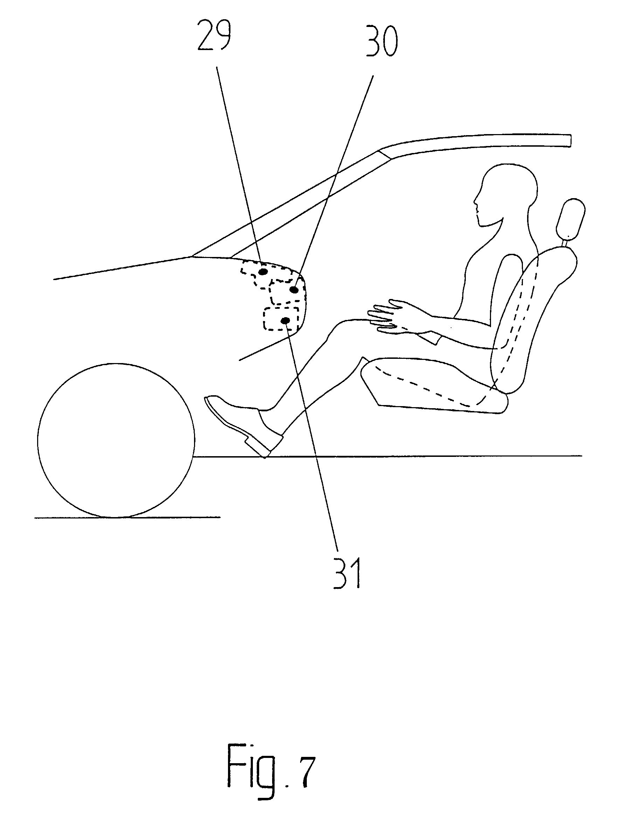

Die Fig. 3 zeigt diesen Gassack im aufgeblasenen Zustand. Es ist ersichtlich, daß er in der Draufsicht auch im aufgeblasenen Zustand die Knochenform aufweist, während er in der Seitenansicht eine kontinuierliche Wölbung 23 aufweist, wie insbesondere auch aus Fig. 7 ersichtlich ist. Da sich der Gassack auch nach unten kontinuierlich wölbt, weist der Gassack im aufgeblasenen Zustand in der Seitenansicht Linsenform auf.

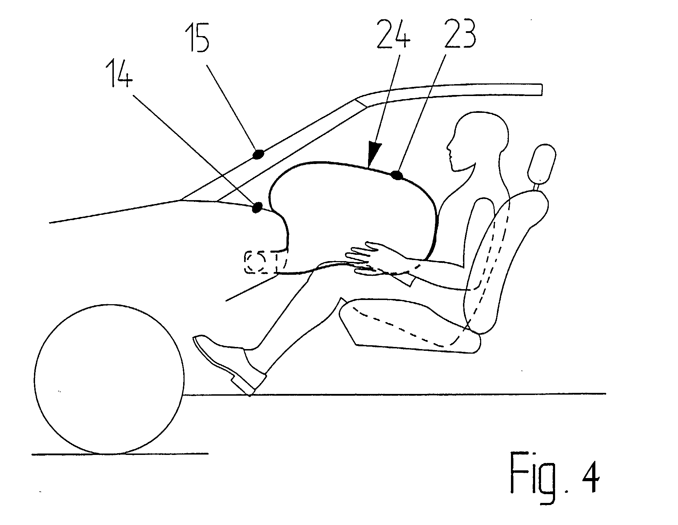

Wie aus der Fig. 4 weiter ersichtlich ist, wird der Gassack 24 bei dargestellten Anbringung unterhalb der Armaturentafel 14 vorwiegend in Richtung des Insassen aufgeblasen und kommt nicht mehr in Kontakt mit der Windschutzscheibe. Eine Abstützung nach oben erfolgt ausschließlich durch die Armaturentafel 14, wobei der Gassack 24 durch den vorderen Abschnitt der Armaturentafel 14 etwas eingedrückt wird. Dadurch wird aber die Funktionsfähigkeit des Gassackes noch erhöht. Der Gassack ist im vollaufgeblasenen Zustand zwischen dem Insassen und der Armaturentafel eingespannt. Dadurch kann er größere Kräfte aufnehmen und seine Position im Thrax- und Abdomenbereich besser halten.

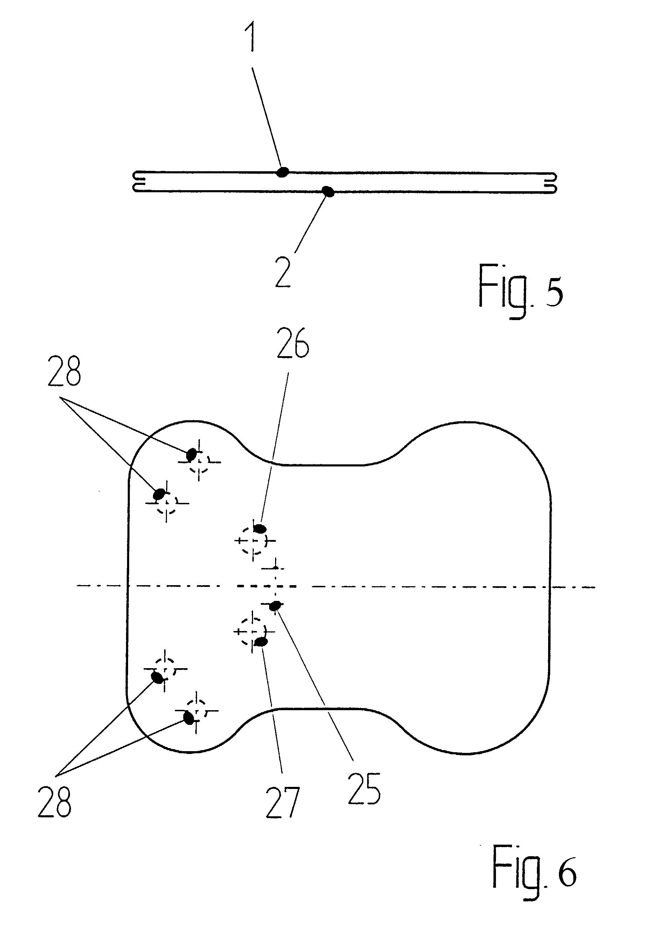

Bei dem in den Figuren 5 und 6 dargestellten Gassack ohne Einblasmund ist an der Unterplatte 2 ein Montageschlitz 25 für den nicht dargestellten Gasgenerator vorgesehen. Weiterhin sind Montageöffnungen 26, 27 für das Generatorträgergehäuse bzw den Gasgenerator in der Unterplatte 2 vorgesehen. In der Unterplatte sind ebenfalls Abströmöffnungen 28 vorgesehen. Dieser knochenförmige Gassack ist insbesondere für eine top-mounted Einbaulage des Beifahrerairbags geeignet.

In der Fig. 7 sind drei unterschiedliche Einbaulagen des erfindungsgemäßen Airbagmoduls dargestellt. Von den dort dargestellten Einbaulagen wird jeweils eine realisiert. Es sind ein Airbagmodul 29 in einer Top-mounted, ein Airbagmodul 30 in einer Mid-mounted und ein Airbagmodul 31 in einer Low-mounted Einbaulage dargestellt.

Die dargestellten Gassäcke sind in den Ausführungsbeispielen in Verbindung mit Beifahrerairbagmodulen dargestellt. Diese Gassäcke sind aber auch für andere Airbags einsetzbar, z. B. für Fahrerairbags im Lenkrad oder Seitenairbags.

## Patentansprüche

1. Airbagmodul mit Gassack und Gasgenerator, insbesondere Beifahrerairbagmodul, wobei der Gassack in ausgebreiteter Lage einen verengten Querschnitt aufweist,
**dadurch gekennzeichnet,**
daß der verengte Querschnitt zumindest annähernd parallele Seiten (19, 20) aufweist, an die sich beidseitig kontinuierlich vergrößerte Abschnitte (21, 22) anschließen, so daß der Gassack knochenförmig ist, und daß der Gassack auch im aufgeblasenen Zustand eine Knochenform aufweist, wobei einer der vergrößerten Abschnitte dem Insassen zugekehrt ist.

2. Airbagmodul nach Anspruch 1, **dadurch gekennzeichnet,** daß sich die zumindest annähernd parallelen Seiten (19, 20) über etwa ein Drittel der Gassackteile erstrecken und daß sich die beidseitig anschließenden vergrößerten Abschnitte jeweils ebenfalls etwa über ein Drittel der Länge erstrecken.

3. Airbagmodul nach Anspruch 1 oder 2, **dadurch gekennzeichnet,** daß ein dem Insassen zugewandter vergrößerter Abschnitt (21) des Gassackes (24) größer ist als ein sich in entgegengesetzter Richtung dem Abschnitt mit parallelen Seiten (19, 20) anschließender vergrößerter Abschnitt (22).

4. Airbagmodul nach mindestens einem der vorhergehenden Ansprüche, **dadurch gekennzeichnet,** daß der Gassack aus zwei Teilen gleicher Form besteht.

5. Airbagmodul mit Gassack und Gasgenerator, insbesondere Beifahrerairbagmodul, vorzugsweise nach mindestens einem der vorhergehenden Ansprüche, **dadurch gekennzeichnet,** daß der Gasgenerator unterhalb, oberhalb oder in der Mitte der Armaturentafel (14) so angeordnet ist, daß seine Hauptausblasrichtung im wesentlichen waagerecht in Richtung auf den Insassen verläuft.

## Claims

1. Airbag module with airbag and gas generator, more particularly passenger airbag module, wherein the airbag has in the expanded position a restricted cross-section, characterised in that the restricted cross-section has at least approximately parallel sides (19,20) adjoined by sections (21,22) enlarged continuously on both sides so that the airbag is bone-shaped and that the airbag also has in the inflated state a bone-shape wherein one of the enlarged sections faces the occupant.

2. Airbag module according to claim 1, characterised in that the at least approximate parallel sides (19,20) extend approximately over a third of the airbag parts and that the enlarged sections adjoining each side each likewise extend over approximately a third of the length.

3. Airbag module according to claim 1 or 2 characterised in that an enlarged section (21) of the airbag (24) facing the occupant is greater than an enlarged section (22) adjoining the section with parallel sides (19,20) in the opposite direction.

4. Airbag module according to at least one of the preceding claims, characterised in that the airbag consists of two parts of identical shape.

5. Airbag module with airbag and gas generator, more particularly passenger airbag module, preferably according to at least one of the preceding claims, characterised in that the gas generator is mounted underneath, above or in the middle of the dashboard (14) so that its main inflation direction runs substantially horizontally in the direction of the occupant.

## Revendications

1. Module d'air-bag comportant un sac à gaz et un générateur de gaz, notamment un module d'air-bag pour un passager, le sac à gaz possédant, dans une position déployée, une section transversale rétrécie,
caractérisé en ce ,
que la section transversale rétrécie possède des côtés (19,20) au moins approximativement parallèles, auxquels se raccordent des sections (21,22) qui augmentent continûment des deux côtés, de sorte que le sac à gaz possède la forme d'un os, et que le sac à gaz possède, également à l'état gonflé, une forme d'os, l'une des parties agrandies étant tournée vers le passager.

2. Module d'air-bag selon la revendication 1, caractérisé en ce que les côtés au moins approximativement parallèles (19,20) s'étendent approximativement sur un tiers des parties du sac à gaz et que les parties agrandies, qui se raccordent des deux côtés, s'étendent respectivement également approximativement sur un tiers de la longueur.

3. Module d'air-bag selon la revendication 1 ou 2, caractérisé en ce qu'une partie agrandie (21), qui est tournée vers le passager, du sac à gaz (24) est plus grande qu'une partie agrandie (22), qui se raccorde en sens opposé à la partie comportant des côtés parallèles (19,20).

4. Module d'air-bag selon au moins l'une des revendications précédentes, caractérisé en ce que le sac à gaz est constitué de deux parties de même forme.

5. Air-bag comportant un sac à gaz et un générateur de gaz, notamment module d'air-bag pour passager, de préférence selon au moins l'une des revendications précédentes, caractérisé en ce que le générateur de gaz est disposé au-dessous, au-dessus ou au centre du tableau de bord (14) de telle sorte que la direction de gonflage principale s'étend sensiblement horizontalement en direction du passager.
